(19) Europäisches Patentamt
European Patent Office
Office européen des brevets

(11) **EP 3 253 656 B1**

(12) **FASCICULE DE BREVET EUROPEEN**

(45) Date de publication et mention de la délivrance du brevet:
**01.04.2020 Bulletin 2020/14**

(21) Numéro de dépôt: **16703473.5**

(22) Date de dépôt: **02.02.2016**

(51) Int Cl.:
**B64G 1/34** *(2006.01)*  **B64G 1/62** *(2006.01)*
**B64G 1/22** *(2006.01)*  **B64G 1/24** *(2006.01)*

(86) Numéro de dépôt international:
**PCT/EP2016/052177**

(87) Numéro de publication internationale:
**WO 2016/124593 (11.08.2016 Gazette 2016/32)**

(54) **SYSTÈME DE DÉSORBITATION DE SATELLITE**

SATELLITENRÜCKHOLSYSTEM

SATELLITE DEORBITING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2015 FR 1550828**

(43) Date de publication de la demande:
**13.12.2017 Bulletin 2017/50**

(73) Titulaire: **ArianeGroup SAS**
**75015 Paris (FR)**

(72) Inventeurs:
• **RASSE, Benjamin**
**33000 Bordeaux (FR)**
• **DAMIANO, Patrice**
**31400 Toulouse (FR)**

(74) Mandataire: **Brevalex**
**95, rue d'Amsterdam**
**75378 Paris Cedex 8 (FR)**

(56) Documents cités:
EP-A2- 0 716 365   WO-A1-02/02402
FR-A1- 2 897 842   FR-A1- 2 897 843
GB-A- 2 122 965   US-A- 3 635 425

## Description

Domaine de l'invention

La présente invention se situe dans le domaine des structures d'aérofreinage pour désorbitation de satellites et prévoit un système à cet effet.

Dans le domaine des satellites, il existe de plus en plus de réglementation ou de guides de bonnes pratiques qui imposent aux opérateurs d'éliminer leurs satellites de leur orbite après leur fin de vie opérationnelle, fin de vie planifiée ou accidentelle.

La présente invention concerne plus particulièrement les satellites en orbite dite basse, au-dessous de 2000 km, pour laquelle après leur fin de vie, les satellites doivent être soit désorbités, soit envoyé en orbite dite « cimetière » au-dessus de 2000 km. Cette opération doit par ailleurs être effectuée en moins de 25 ans.

Arrière plan technologique

Aucun satellite aujourd'hui n'est capable de satisfaire cette exigence sans embarquer un système dédié de désorbitation de masse importante ou sans utiliser une fraction importante de l'hydrazine embarquée (environ 30 %) pour amener le satellite en position de désorbitation.

Parmi les diverses solutions possibles pour les opérations de désorbitation, on a proposé des voiles d'aérofreinage, c'est à dire des surfaces qui utilisent l'atmosphère résiduelle présente en orbite basse comme frein aérodynamique pour freiner un objet et le ralentir, donc au final diminuer l'altitude de son orbite.

Ce type de solution est dédiée à l'opération de désorbitation des satellites.

Ces surfaces utilisent des structures ultralégères, arachnéennes ou appelées selon le terme anglais "gossamer" connues dans l'industrie spatiale.

Le principe d'aérofreinage est par exemple décrit dans les documents FR 2 897 842 A1 qui porte sur le principe de désorbitation par structure d'aérofreinage et décrit un satellite comportant deux mâts portant chacun une paire de panneaux et formant une voile d'aérofreinage et FR 2 897 843 A1 qui décrit une solution technologique pour la réalisation d'une telle voile. Ces deux documents mettent l'accent sur la relation entre l'efficacité de la structure d'aérofreinage et la stabilité du satellite et proposent des solutions pour conserver une efficacité d'aérofreinage malgré l'instabilité du satellite, ce qui conduit toutefois à sur-dimensionner la structure d'aérofreinage et ce qui grève donc le bilan de masse du satellite.

La problématique vient du fait qu'après le déploiement de la voile de désorbitation, il n'est plus possible de garder le satellite actif durant toute la durée de sa désorbitation, à la fois pour des raisons économiques (contrôler un satellite qui ne remplit pas sa fonction pendant des durées jusqu'à 25 ans n'est pas économiquement rentable) et pour des raisons technique (en fin de vie, il n'y a plus d'énergie propulsive ou de pilotage disponible à bord).

Au contraire, la règle est de « passiver » un satellite qui en a terminé avec sa mission, c'est à dire de faire disparaitre toute source énergétique susceptible d'une réaction brutale, en particulier on vide donc les batteries et les réservoirs d'ergol, on arrête les roues d'inertie, ... ; cela afin de limiter un risque de création de débris en orbite en cas d'explosion.

Au final, l'attitude du satellite n'est plus contrôlée par le SCAO (système de Contrôle d'Attitude et d'Orbite) et rien n'empêche le satellite de tournoyer sur lui même.

Et pourtant l'attitude du satellite durant la phase de désorbitation est critique car elle conditionne la surface aérodynamique de freinage.

Dans le domaine des voiles de désorbitation, deux approches sont alors considérées :

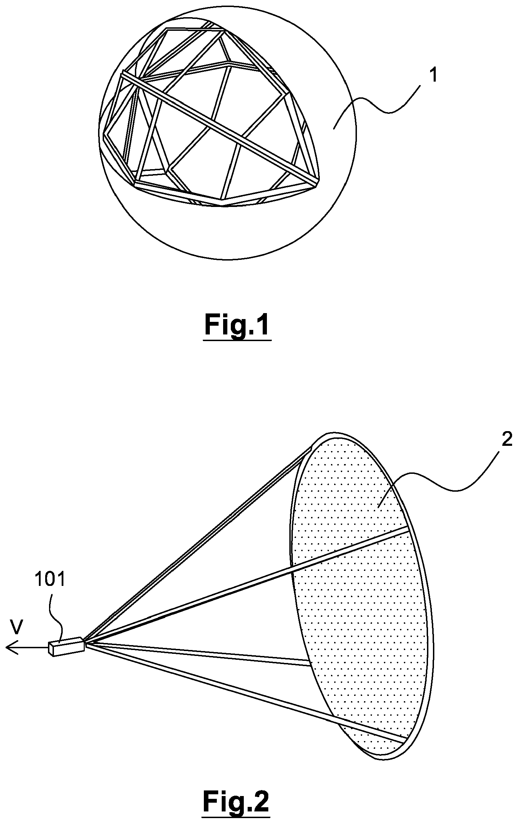

- Une approche isotropique. La surface déployée présente une surface aérodynamique identique quelle que soit l'attitude du satellite, par exemple : déploiement d'une sphère 1 comme sur la figure 1 ou alors une surface moyenne aérodynamique est prise en compte après analyse Monte-Carlo sur l'attitude du satellite.
- Une approche considérant une attitude privilégiée stabilisée de façon passive, par les forces aérodynamiques, de gravité ou autres. Par exemple, le satellite peut être stabilisé passivement par le positionnement relatif du centre de gravité et du centre d'application de la force de freinage (CoG et centre de freinage alignés avec le vecteur vitesse)., comme dans le cas du satellite 101 de la figure 2 pour lequel une voile 2 en forme de disque est déployée.

Dans la première approche, le rapport surface aérodynamique effective sur surface déployée n'est pas optimale, car il est nécessaire pour obtenir une surface de freinage suffisante, de déployer une surface plus grande, souvent en 3D (donc plus complexe), par exemple des sphères ou des formes complexes telles celles indiquées dans FR 2 897 842 A1

Dans la seconde approche, à haute altitude, la stabilité de la position optimale est difficile à obtenir par le simple positionnement du foyer aérodynamique en arrière du centre de gravité et aligné avec le vecteur vitesse. En effet, la pression résiduelle devient très faible d'autant plus qu'on s'éloigne de la terre, et les forces aérodynamiques deviennent mineures par rapport aux forces de perturbation (gradient de gravité, pression solaire, couple magnétique, déformation de la voile, spin satellite)

A haute altitude donc, l'attitude du satellite peut être considérablement modifiée et ne peut pas être stabilisée par le freinage aérodynamique ; la voile d'aérofreinage ne plus être maintenue en position optimale par ce freinage, et sans autre dispositif l'efficacité de la voile d'aérofreinage diminue notablement.

La densité atmosphérique a été modélisée et on dispose pour faire les calculs de modèles standards ou empiriques de la (haute et basse) atmosphère comme le NRLMSISE-00 du laboratoire de recherche navale des USA, le CIRA édité par le COSPAR (Comite pour la recherche spatiale) ou Jacchia (L. G. Jacchia, Smithsonian Astrophysical Observatory Special Report N° 375, 1977).

A partir de ces modèles, il est possible en utilisant des outils adaptés, comme l'outils STELLA du CNES, de calculer et prédire la désorbitation d'un satellite en fonction de son altitude initiale et plus généralement des ses paramètres orbitaux initiaux, de sa masse et de sa surface efficace (celle qui contribue .

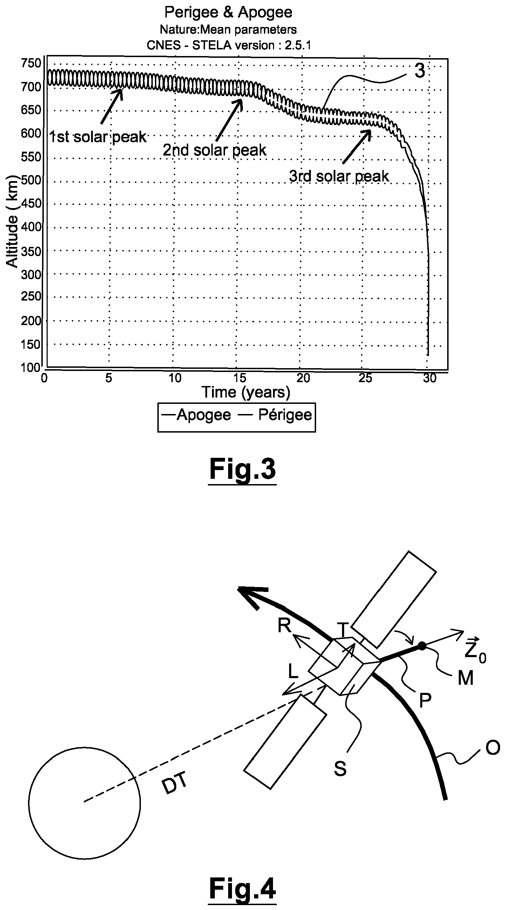

La figure 3 représente un exemple de courbe de désorbitation d'un satellite de masse 285Kg, avec une surface constante moyenne de 5m2 depuis une orbite quasi circulaire un peu au dessus de 700Km.

La désorbitation se produit en une trentaine d'année, avec des accélérations de la diminution d'altitude au moment des pics d'activité solaire.

Mais cette figure montre aussi que la durée la plus longue de la désorbitation passive se situe à une altitude supérieure à 600 km environ, ce qui traduit en fait qu'au dessus de cette altitude, l'atmosphère résiduelle est vraiment très tenue.

Il est en fait très important de maximiser l'efficacité massique de la voile de désorbitation au dessus de cette altitude, et pour cela d'y assurer une attitude stable du satellite permettant d'avoir la surface de la voile en permanence le plus perpendiculaire possible à la tangente à la trajectoire, et ce malgré le manque d'efficacité du freinage aérodynamique quant à cette stabilité.

Il est à noter que ce besoin d'efficacité de la voile est vrai à toutes les altitudes, et donc aussi à plus basse altitude, mais on peut alors compter sur les forces aérodynamique pour assurer au satellite une attitude stable et optimisée : en fait l'attitude optimale d'un satellite vis-à-vis de sa désorbitation est la même à toutes les altitudes, puisqu'il s'agit de maintenir la voile le plus possible perpendiculaire au « vent », donc à la tangente à la trajectoire.

Il est d'autre part connu de stabiliser un satellite par gradient de gravité. Cette technologie bien connue est basé sur un phénomène physique qui explique pourquoi la Lune présente toujours une même face à la Terre.

Cette stabilisation vient du fait que quand un objet en orbite autour de la Terre n'a pas une densité homogène, il est soumis à un couple de rappel, du fait de la variation du champ de gravité, qui a tendance à l'orienter de façon que sa partie la plus dense soit plus près de la Terre.

Cet effet a été utilisé pour stabiliser des satellites sur leur orbite, par exemple en leur ajoutant une poutre au bout de laquelle une masse est placée. Si le système est bien conçu, le satellite S à tendance à s'équilibrer, la poutre P se positionnant dans une direction passant par le centre de la Terre, le satellite étant près de la Terre, et la masse M à l'opposé comme représenté en figure 4.

Bien entendu, la situation réelle est un peu plus complexe, et il existe de problèmes de stabilité. Il est possible de maitriser ces problèmes, , en particulier par le choix adapté de la longueur de la poutre et de la masse placée à son extrémité, en fonction de la masse du satellite et de son orbite.

Brève description de l'invention

La présente invention a pour objectif de stabiliser passivement un satellite comportant deux mâts porteurs de panneaux formant une voile d'aérofreinage à notamment au-dessus de 650 km mais aussi au-dessous après le déploiement d'une telle aile d'aérofreinage dans une attitude privilégiée permettant d'optimiser le ratio surface aérodynamique effective / surface déployée, et donc de maximiser à toute altitude le freinage aérodynamique en sorte de faire diminuer l'altitude de satellite de façon significative sans consommation d'énergie. Dans ce cadre, l'invention consiste à combiner Une stabilisation par gradient de gravité, pour les hautes altitudes et une stabilisation aérodynamique pour les altitudes plus basses, les deux méthodes permettant de maintenir identique l'attitude du satellite quelle que soit son altitude..

Pour ce faire, l'invention propose un dispositif de stabilisation et de désorbitation de satellite qui comporte une paire de mâts coplanaires chacun porteur d'au moins une membrane formant une voile d'aérofreinage, lesdits mâts étant fixés sur le satellite selon des axes non parallèles et étant chacun munis à leur extrémité opposée à leur extrémité fixée sur le satellite d'une masse de génération d'un gradient de gravité et pour lequel les mâts forment avec la bissectrice entre les mâts un angle fixe adapté à aligner la bissectrice avec le vecteur vitesse du satellite à toute altitude.

Les mâts portent chacun préférablement deux membranes sous forme de panneaux disposés en V pour former les voiles d'aérofreinage.

Les panneaux sont avantageusement rectangulaires, l'un de leurs grands côtés étant fixé au mât.

Selon un mode de réalisation particulier, les panneaux d'un même mât font entre eux un angle de 70 à 110°.

Lequel le V a avantageusement la même orientation pour les deux mâts.

Selon l'invention, la bissectrice entre les deux mâts porteurs des voiles est un axe du repère principal de la matrice d'inertie du satellite et pour lequel l'inertie $I_Z$ suivant ladite bissectrice est comprise entre les valeurs d'inertie sur les deux autres axes du repère principal.

L'invention propose en outre un procédé de dimensionnement de mâts, de détermination des masses en bout de mât et de l'angle entre la bissectrice des mâts et ces derniers d'un satellite comportant les étapes de:

- détermination au moyen d'outils de calculs de trajectoire une surface efficace minimale de voile d'aérofreinage nécessaire et suffisante pour permettre la désorbitation en une durée choisie du satellite;
- répartition de cette surface déterminée sur deux mats coplanaires, de longueur L, faisant un angle $2\alpha$ entre eux ;
- placement à l'extrémité de chaque mât d'une masse m,
- positionnement de la paire de mâts en un endroit arbitraire du satellite
- choix d'un repère satellite tel que son axe Z soit la bissectrice de l'angle entre les deux mâts;
- calcul de la matrice d'inertie du satellite, puis diagonalisation de cette matrice;
- reproduction de la démarche par itérations successives en faisant varier l'endroit d'implantation des mâts, leur longueur, les masses m et l'angle a, pour obtenir :

    a - Que l'axe Z du repère principal satellite soit aussi la bissectrice des mâts;

    b - Que l'inertie $I_Z$ sur cet axe dans ce repère soit une valeur intermédiaire $I_{intermédiaire}$ entre une valeur $I_{minimale}$ et une valeur $I_{maximale}$ sur les deux autres axes dudit repère;

- choix les valeurs des masses, des longueurs de mâts et d'angle $\alpha$ qui permettent de minimiser la masse totale des voiles tout en assurant une certaine robustesse de la solution, c'est à dire que des variations faibles des paramètres autour des valeurs retenues ne changent pas les attitudes du satellite avec ses voiles.

Brève description des dessins

D'autres caractéristiques et avantages de l'invention seront apparents à la lecture de la description qui suit d'un exemple non limitatif de réalisation de l'invention en référence aux dessins qui représentent:

En figure 1: un premier exemple de structure d'aérofreinage sphérique de l'art antérieur;

En figure 2: un second exemple d'une structure d'aérofreinage de l'art antérieur;

En figure 3: une courbe de désorbitation typique;

En figure 4: une vue schématique du principe de gradient de gravité appliqué à un satellite;

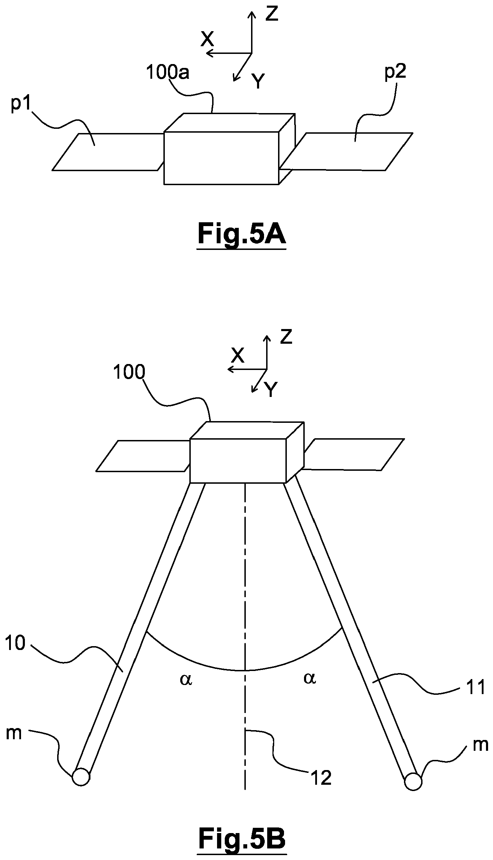

En figure 5: une vue schématique d'un satellite selon l'invention;

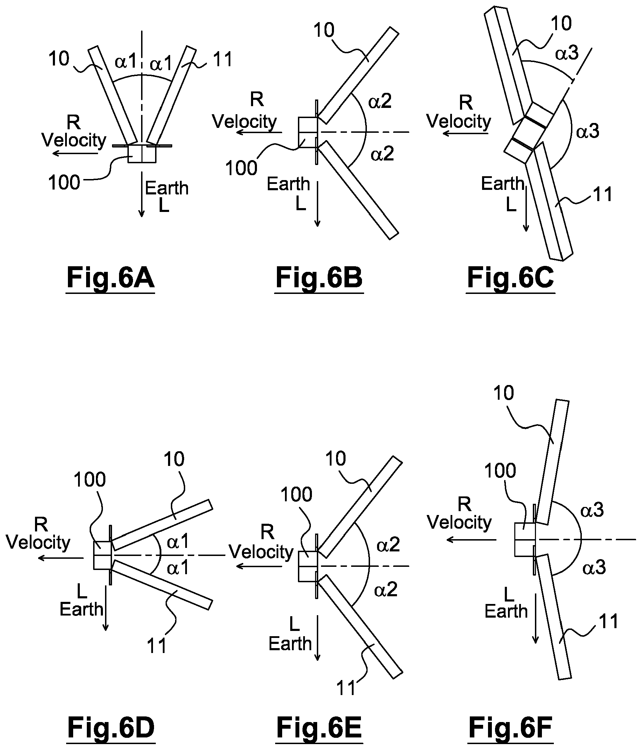

Aux figures 6A à 6C: des vues de satellites en position stable par gradient de gravité selon trois domaines d'angles en haute altitude;

Aux figures 6D à 6F: des vues de satellites en position stable par aérofreinage selon les trois domaines d'angles des figures 6A à 6C en basse altitude;

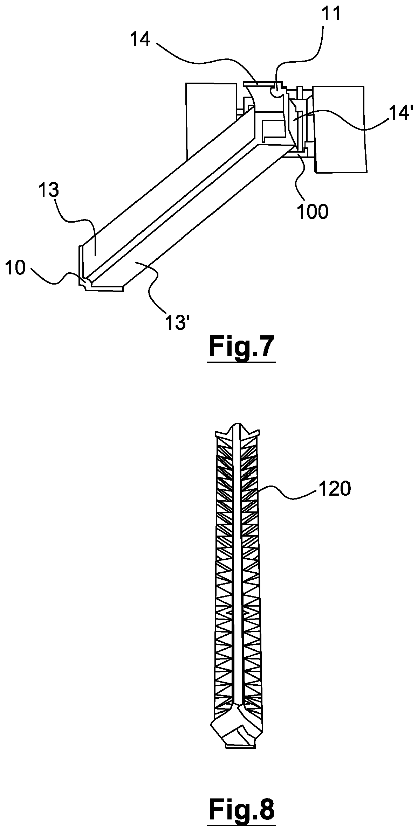

En figure 7: une vue du satellite de l'arrière dans le sens de son déplacement;

En figure 8: une vue d'un exemple de réalisation d'un mât utilisable dans l'invention.

Description détaillée de modes de réalisation de l'invention

Le problème que se propose de résoudre l'invention est de faire en sorte que le satellite ait une position stable qui permette d'avoir la surface d'aérofreinage la plus grande possible à haute altitude, dans le plan perpendiculaire à l'axe de la trajectoire du satellite.

Le principe du fonctionnement du dispositif de l'invention est basé sur le gradient de gravité tel que schématisé en figure 4 pour un satellite S pourvu d'un mât M au bout duquel se trouve une masse M et sur une orbite O à une distance DT du centre de la Terre.

Pour comprendre les différents modes de réalisation de l'invention, il y a lieu de définir trois repères :

- Un repère lié à l'orbite du satellite, dit « repère orbital local », au centre de gravité du satellite;
- Un premier repère lié au satellite, dit « repère satellite » dans lequel on va décrire la géométrie du satellite et ses propriétés, au centre de gravité du satellite également;
- Un second repère lié au satellite, dit « repère principal satellite », toujours au centre de gravité du satellite.

La figure 4 décrit le repère orbital local qui comporte :

L'axe L, qui lie le centre de la terre au centre de gravité du satellite (Le lacet du satellite autour de cet axe)
L'axe R, tangent à la trajectoire du satellite (Le roulis du satellite autour de cet axe)
L'axe T perpendiculaire aux deux autres (Le tangage du satellite autour de cet axe).

Pour qu'une voile d'aérofreinage soit le plus efficace possible, elle doit être sensiblement dans un plan perpendiculaire à l'axe R, même si des rotations autour de cet axe sont acceptables.

Le repère satellite est un repère arbitraire, dont le centre est placé au centre de gravité du satellite, dans lequel on décrit la géométrie du satellite de façon simple. Par exemple figure 5, pour un satellite de forme cubique, on a choisi un repère satellite tel que chaque axe soit perpendiculaire à une des faces du satellite ; on a également choisi ici ce repère de telle façon que la bissectrice des deux voiles 10 et 11 soit l'axe z de ce repère.

Dans ce repère, on peut alors calculer la matrice d'inertie du satellite selon sa distribution de masse.

Si $(x_i, y_i, z_i)$ sont des coordonnées d'un point de masse mi du satellite, alors dans ce repère satellite, la matrice d'inertie s'écrit de façon classique :

$$\bar{\bar{I}} = \begin{bmatrix} I_{Ox} & -I_{xy} & -I_{xz} \\ -I_{xy} & I_{Oy} & -I_{yz} \\ -I_{xz} & -I_{yz} & I_{Oz} \end{bmatrix} = \begin{bmatrix} \sum_i m_i(y_i^2 + z_i^2) & -\sum_i m_i x_i y_i & -\sum_i m_i x_i z_i \\ -\sum_i m_i x_i y_i & \sum_i m_i(x_i^2 + z_i^2) & -\sum_i m_i y_i z_i \\ -\sum_i m_i x_i z_i & -\sum_i m_i y_i z_i & \sum_i m_i(x_i^2 + y_i^2) \end{bmatrix},$$

Le repère principal satellite, qui comporte des points de coordonnées (X, Y, Z) s'obtient en recherchant les directions principales de la matrice d'inertie du satellite. Dans ce repère, qui se déduit du repère satellite par une rotation, la matrice d'inertie au centre de gravité du satellite est diagonale de type:

$$Id= \begin{bmatrix} I_X & 0 & 0 \\ 0 & I_Y & 0 \\ 0 & 0 & I_Z \end{bmatrix}$$

Les valeurs d'inertie $I_X$, $I_Y$, $I_Z$ sont en général distinctes, et donc on peut les classer selon leur valeur $I_{minimale} < I_{intermédiaire} < I_{maximale}$.

En considérant la matrice d'inertie $I_d$ diagonale ci-dessus du satellite dans le repère principal satellite, alors la condition connue de stabilité par gradient de gravité de l'attitude du satellite se traduit par le fait :

- que l'axe du repère principal d'inertie pour lequel la valeur d'inertie est $I_{intermédiaire}$ s'aligne avec l'axe R du repère orbital local;
- que l'axe du repère principal d'inertie pour lequel la valeur d'inertie est $I_{maximale}$ s'aligne avec l'axe T du repère orbital local;
- que l'axe du repère principal d'inertie pour lequel la valeur d'inertie est $I_{minimale}$ s'aligne avec l'axe L du repère orbital local.

C'est à dire que le satellite, sous l'effet du gradient de gravité a basculé jusqu'à atteindre la position stable indiquée ci-dessus.

Le gradient de gravité fournit ainsi un couple de rappel vers une position d'attitude stable du satellite. Les oscillations autour de la position d'équilibre étant naturellement amorties et dissipées par les appendices flexibles (mâts, voiles), le ballotement des fluides résiduels dans les réservoirs et le frottement atmosphérique.

Comme représenté en figure 5, le satellite 100 comporte deux mâts 10, 11 coplanaires faisant un angle α avec une droite 12 perpendiculaire à un plan P de pose des mâts sur le satellite ; la droite 12 est la bissectrice de l'angle entre les deux mats 10 et 11.

La présente invention faisant coïncider la position stable par gradient de gravité et la position stable aérodynamique, la perte d'efficacité liée à des changements d'attitude du satellite selon l'altitude et à un manque de stabilité est évitée.

Les paramètres de réglage des mâts 10, 11 sont l'angle α : angle de déploiement du mât par rapport à la verticale du plan de pose du mât sur le satellite, la longueur L des mâts, la masse m en extrémité des mâts assurant le gradient de gravité.

Avec des valeurs d'inertie du satellite données, en fonction de l'angle $\alpha$,, de la longueur des mâts et de la masse en extrémité de mâts, il est possible d'obtenir trois configurations stables du satellite. Selon les figures 6A à 6C, trois domaines angulaires de déploiement des mâts correspondent à trois positions stables à haute altitude sous l'effet du gradient de gravité:

- la position de la figure 6A, premier domaine angulaire $\alpha$1 pour lequel les mâts sont orientés vers le haut à l'opposée de la direction DT du centre de la Terre;
- la position de la figure 6B, deuxième domaine angulaire $\alpha$2 pour lequel les mâts sont orientés dans une direction opposée au déplacement V du satellite, le plan contenant les mâts étant orienté dans la direction DT de la Terre et;
- la position de la figure 6C troisième domaine angulaire a3 avec les mâts dans un plan incliné par rapport au déplacement du satellite V et par rapport à la direction du centre de la Terre DT.

En basse altitude, sous l'action du freinage aérodynamique, selon les figures 6D à 6F trois nouvelles positions stables sont obtenues. Aux figures 6D à 6F les mâts sont orientés vers l'arrière du satellite par rapport à son sens de déplacement.

On constate que seul le deuxième domaine peut assurer une position stable en haute altitude, figure 6B, identique à la position aérodynamique, figure 6E, les deux autres domaines conduisant à un basculement entre les régimes à stabilisation de gravité des figures 6A, 6C et respectivement les régimes de stabilisation aérodynamique des figures 6D et 6F.

L'angle a, pour une longueur de mât donné et une inertie de satellite donnée, et s'il est bien choisi, permet donc d'assurer la coïncidence des régimes aérodynamiques et gradient de gravité.

La longueur L des mâts permet de fixer la surface aérodynamique déployée et le couple de gradient de gravité.

La masse m à l'extrémité du mât permet de régler le couple de gradient de gravité stabilisant l'attitude du satellite.

En considérant un satellite typiques d'un satellite 100a de la classe Myriades représenté schématiquement à la figure 5A et dont les dimensions et les masses sont un corps parallélépipédique de 1m x 1m x 0.6m, comportant deux petits panneaux solaires p1, p2 de 0.6 m x 1 m, une masse de 183 kg, mais sans voiles d'aérofreinage, les axes principaux d'inertie X, Y, Z sont approximativement tels que schématisés avec l'axe des X selon la direction des panneaux solaires, l'axe Z perpendiculaire au plan contenant lesdits panneaux et l'axe Y perpendiculaire aux deux autres.

La matrice principale d'inertie du satellite est alors dans ce repère :

$$I = \begin{bmatrix} 19 & & \\ & 31 & \\ & & 58 \end{bmatrix} kg.m^2$$

Dans ce cas, sous l'effet du gradient de gravité, la position stable du satellite n'est pas celle avec l'axe z aligné avec l'axe R, mais celle avec l'axe y aligné avec l'axe R et les deux panneaux solaires n'ont aucun effet de freinage aérodynamique.

On considère maintenant selon l'invention un satellite 100 comportant 2 mâts 10, 11 tels qu'indiqué sur la figure 5B ; d'une longueur de 4,90 m, comportant chacun une masse m de 1.8 kg à son extrémité libre et portant chacun une voile de 600 g de longueur 4,9 m et de largeur 0,6 m.

En faisant varier l'angle $\alpha$ de déploiement des mâts par rapport à la bissectrice 12 entre ces mâts selon l'axe Z, on distingue différentes positions d'équilibre dans le repère orbital local.

Le tableau suivant:

| | $\alpha$ = 20° | | | $\alpha$ = 47,5° | | | $\alpha$ = 80° | | |
|---|---|---|---|---|---|---|---|---|---|
| Inertie repère principal satellite | 118 | | | 78 | | | 33 | | |
| | | 146 | | | 157 | | | 163 | |
| | | | 81 | | | 134 | | | 184 |

donne des inerties typiques selon les axes satellite pour différentes valeurs d'angle $\alpha$ dans le repère principal satellite. Ce repère principal subit une rotation autour de l'axe z par rapport au repère géométrique de la figure 5A du fait des voiles d'aérofreinage. Cette rotation en roulis par rapport à la trajectoire du satellite n'étant pas problématique par rapport au freinage de ce dernier est négligée dans les calculs.

Ce tableau montre qu'à haute altitude, 3 cas sont possibles :

- Pour un angle $\alpha$ faible, c'est l'axe X du satellite qui est parallèle à l'axe vitesse du satellite sur sa trajectoire, axe R de la figure 4;
- Pour un angle intermédiaire, c'est l'axe Z qui est parallèle à l'axe R;
- Pour un angle élevé, c'est l'axe Y qui est parallèle à l'axe R.

Des calculs plus complets montrent qu'on peut identifier en haute altitude trois types d'attitude du satellite suivant l'angle de déploiement $\alpha$. Ces attitudes sont schématisées aux figures 6A à 6C à longueur de mât, valeur de la masse en bout de mât et surface de voile constants.

Comme vu précédemment, les figures 6D à 6F représentent quant à elles pour les même conditions, l'attitude du satellite à basse altitude sous l'effet de la trainée aérodynamique.

Il ressort des calculs que deux valeurs $\alpha_1$ et $\alpha_2$ d'angles définissent ainsi des domaines qui conduisent à 3 comportement différent du satellite avec ses voiles :

- Pour $\alpha < \alpha1$ : Il y a un basculement du satellite lors du passage en régime aérodynamique selon les figures 6A et 6D;
- Pour $\alpha_1 \leq \alpha < \alpha_2$: Le satellite conservera la même attitude stable en haute et basse altitude selon les figures 6B et 6E;
- Pour $\alpha_2 \leq \alpha$ : Le satellite se réorientera suivant l'axe de lacet les figures 6C et 6F.

Pour les données de satellites mentionnées plus haut, $\alpha_1 = 33°$, $\alpha_2 = 62°$.

On choisit donc l'angle d'inclinaison des mâts par rapport à leur bissectrice entre $\alpha_1$ et $\alpha_2$ (33° et 62° pour le satellite de l'exemple) qui permet de faire coïncider la position gradient de gravité à haute altitude avec la position aérodynamique à basse altitude, en optimisant cet angle, car plus l'angle est grand, plus la surface aérodynamique présentée est importante.

Au final et dans le cas du satellite de l'exemple choisi, on a retenu un angle de déploiement des mâts de 47,5° qui permet d'assurer une marge de robustesse aux incertitudes d'inertie.

La surface aérodynamique efficace dans la position d'équilibre est alors de 6,94 m$^2$. Par rapport à la solution de l'art antérieur, qui, pour le même satellite de la famille « myriade », pour la même masse additionnelle et présentant des mâts et des membranes identiques n'est pas stabilisé en attitude et présente une surface aérodynamique moyenne retenue de 5,1 m$^2$ seulement, l'invention permet d'améliorer de 36 % la surface aérodynamique du satellite sans augmentation de masse embarquée.

La figure 7 représente le satellite 100 stabilisé avec ses mâts 10, 11 et les panneaux 13, 13', 14, 14' déployés. Les panneaux sont réalisés de manière connue par des membranes et forment une voilure d'aérofreinage. Le satellite est sur cette figure vu de derrière par rapport à sa trajectoire. La réalisation des mâts de déploiement et des membranes d'aérofreinage est basée sur des mâts gonflables, par exemple des mâts 120 en laminé polyimide-aluminium qui sont rigidifiés par une surpression comme représenté en figure 8. L'architecture du système d'aérofreinage est composée deux mâts 10, 11 et de quatre membranes 13, 13', 14, 14' d'aérofreinage : chaque voile est optimisée pour tenir compte d'éventuelles oscillations du satellite autour de l'axe z.

Ce type de système de désorbitation peut être embarqué à des fins de désorbitation sur n'importe quel satellite LEO dont l'orbite est au-dessous de 850 km du fait qu'au dessus de cette altitude l'atmosphère est trop ténue pour ralentir suffisamment le satellite qui nécessite un dispositif actif pour le faire descendre dans un temps compatible avec les exigences spatiales.

On comprend également que pour chaque satellite, les angles $\alpha1$ et $\alpha2$, la longueur des mats, les masses à leur extrémité, la surface des voile doit être adaptée à l'aide de calcul tels ceux décrits ci-dessus.

Le procédé de dimensionnement des mâts, de détermination des masses m et de l'angle $\alpha$ de l'invention est le suivant :

- On détermine au moyen d'outils de calculs de trajectoire connus tel par exemple mais de manière non limitative l'outil Stella du CNES (Centre National des Etudes Spatiales, France) une surface efficace minimale de la voile, c'est à dire la projection perpendiculaire à la trajectoire de la voile d'aérofreinage nécessaire et suffisante pour permettre la désorbitation en une durée choisie du satellite ; cette durée est au maximum 25 ans selon les lois et codes de bonne conduite du domaine ;
- Cette surface étant déterminée, on la répartit sur deux mâts coplanaires, de longueur L, faisant un angle 2$\alpha$ entre eux;
- On dispose à l'extrémité de chaque mât une masse m;
- On place la paire de mâts en un endroit arbitraire du satellite;
- On choisit un repère satellite tel que son axe z soit la bissectrice de l'angle entre les deux mâts;
- On calcule la matrice d'inertie du satellite, puis on la diagonalise;

- On reproduit la démarche par itérations successives en faisant varier l'endroit d'implantation des mâts, leur longueur, les masses m et l'angle a, pour obtenir :

  a - Que l'axe Z du repère principal satellite soit aussi la bissectrice des mâts;
  b - Que l'inertie $I_Z$ dans ce repère soit la valeur intermédiaire $I_{intermédiaire}$;

- On choisit les valeurs des masses m, des longueurs de mats et d'angle $\alpha$ qui permettent de minimiser la masse totale des voiles tout en assurant une certaine robustesse de la solution, c'est à dire que des variations faibles des paramètres autour des valeurs retenues ne changent pas les attitudes du satellite avec ses voiles.

Dans ces conditions, selon le procédé de l'invention, l'axe Z s'aligne avec le vecteur vitesse du satellite tant à haute altitude sous l'action du gradient de gravité qu'à basse altitude sous l'action de la force aérodynamique appliquée sur les voiles.

Le procédé de l'invention n'est pas limité aux calculs et caractéristiques du satellite donné en exemple et peut s'appliquer notamment à des satellites jusqu'à 500 Kg utilisés en orbite basse dite LEO.

**Revendications**

1. Satellite pourvu d'un dispositif de stabilisation et de désorbitation de satellite (100), le dispositif comportant une paire de mâts (10, 11) coplanaires chacun porteur d'au moins une membrane formant une voile d'aérofreinage, lesdits mâts étant fixés sur le satellite façon a ce que leurs axes longitudinaux soient non parallèles et étant chacun munis à leur extrémité opposée à leur extrémité fixée sur le satellite d'une masse (m) de génération d'un gradient de gravité et pour lequel les mâts sont disposés en sorte de former avec la bissectrice (12) entre les mâts un angle $\alpha$ fixe adapté à aligner la bissectrice avec le vecteur vitesse du satellite à toute altitude, ladite bissectrice étant un axe du repère principal de la matrice d'inertie du satellite tel que l'inertie IZ suivant ladite bissectrice est comprise entre les valeurs d'inertie sur les deux autres axes du repère principal.

2. Satellite pourvu d'un dispositif de stabilisation et de désorbitation de satellite selon la revendication 1 pour lequel les mâts portent chacun deux membranes sous forme de panneaux (13, 13', 14, 14') disposés en V pour former les voiles d'aérofreinage.

3. Satellite pourvu d'un dispositif de stabilisation et de désorbitation de satellite selon la revendication 2 pour lequel les panneaux (13, 13', 14, 14') sont rectangulaires, l'un de leurs grands côtés étant fixé au mât.

4. Satellite pourvu d'un dispositif de stabilisation et de désorbitation de satellite selon la revendication 2 ou 3 pour lequel les panneaux d'un même mât font entre eux un angle de 70 à 110°.

5. Satellite pourvu d'un dispositif de stabilisation et de désorbitation de satellite selon l'une quelconque des revendications 2, 3 ou 4 pour lequel l'orientation des panneaux disposés en V est la même pour les deux mâts (10, 11).

6. Procédé réalisation d'un dispositif de stabilisation et de désorbitation de satellite comportant un dispositif de stabilisation et de désorbitation comportant une paire de mâts (10, 11) coplanaires chacun porteur d'au moins une membrane formant une voile d'aérofreinage et étant chacun munis à leur extrémité opposée à leur extrémité fixée sur le satellite d'une masse (m) de génération d'un gradient de gravité. comportant les étapes de:

   - détermination au moyen d'outils de calculs de trajectoire une surface efficace minimale de voile d'aérofreinage nécessaire et suffisante pour permettre la désorbitation en une durée choisie du satellite;
   - répartition de cette surface déterminée sur deux mats coplanaires, de longueur L, faisant un angle $2\alpha$ entre eux ;
   - placement à l'extrémité de chaque mât d'une masse m,
   - positionnement de la paire de mâts en un endroit arbitraire du satellite
   - choix d'un repère satellite tel que son axe Z soit la bissectrice de l'angle entre les deux mâts;
   - calcul de la matrice d'inertie du satellite, puis diagonalisation de cette matrice;
   - reproduction de la démarche par itérations successives en faisant varier l'endroit d'implantation des mâts, leur longueur, les masses m et l'angle a, pour obtenir :

     a - que l'axe Z du repère principal satellite soit aussi la bissectrice des mâts;
     b - que l'inertie IZ sur cet axe dans ce repère soit une valeur intermédiaire $I_{intermédiaire}$ entre une valeur

$I_{minimale}$ et une valeur $I_{maximale}$ sur les deux autres axes dudit repère;

- choix des valeurs des masses m, des longueurs de mâts et d'angle $\alpha$ qui permettent de minimiser la masse totale des voiles tout en assurant une certaine robustesse de la solution, c'est à dire que des variations faibles des paramètres autour des valeurs retenues ne changent pas les attitudes du satellite avec ses voiles,

de sorte que lesdits mâts soient fixés sur le satellite de façon a ce que leurs axes longitudinaux soient non parallèles, lesdits mâts étant disposés en sorte de former avec la bissectrice (12) entre les mâts un angle $\alpha$ fixe adapté à aligner la bissectrice avec le vecteur vitesse du satellite à toute altitude.

7. Procédé selon la revendication 6 pour lequel on équipe les mâts chacun de deux membranes sous forme de panneaux (13, 13', 14, 14') disposés en V pour former les voiles d'aérofreinage.

8. Procédé selon la revendication 7 pour lequel les panneaux (13, 13', 14, 14') sont réalisés rectangulaires, l'un de leurs grands côtés étant fixé au mât.

9. Procédé selon la revendication 7 ou 8 pour lequel les panneaux d'un même mât font entre eux un angle de 70 à 110°.

10. Procédé selon l'une quelconque des revendications 7, 8 ou 9 pour lequel l'orientation des panneaux disposés en V est la même pour les deux mâts (10, 11).

11. Satellite comportant un dispositif de stabilisation et de désorbitation réalisé selon l'une quelconque des revendications 6 à 10.

**Patentansprüche**

1. Satellit mit einer Satellitenstabilisierungs- und Deorbitierungsvorrichtung (100), wobei die Vorrichtung ein Paar von koplanaren Masten (10, 11) enthält, die jeweils mindestens eine Membran tragen, die einen Atmosphärenbremsflügel bildet, wobei die Masten an dem Satelliten so befestigt sind, dass ihre Längsachsen nicht parallel verlaufen, und jeweils an ihrem dem an den Satelliten befestigten Ende gegenüberliegenden Ende mit einer Masse (m) zum Erzeugen eines Gravitationsgradienten versehen sind, wobei die Masten so angeordnet sind, dass sie mit der Winkelhalbierenden (12) zwischen den Masten einen festen Winkel $\alpha$ einschließen, der dazu ausgelegt ist, die Winkelhalbierende mit dem Geschwindigkeitsvektor des Satelliten in jeglicher Höhe auszurichten, wobei die Winkelhalbierende eine Achse des Hauptbezugsystems der Trägheitsmatrix des Satelliten ist, so dass die der Winkelhalbierenden folgende Trägheit IZ zwischen den Trägheitswerten auf den beiden weiteren Achsen des Hauptbezugssystems liegt.

2. Satellit mit einer Satellitenstabilisierungs- und Deorbitierungsvorrichtung nach Anspruch 1, wobei die Masten jeweils zwei Membrane in Form von Paneelen (13, 13', 14, 14') tragen, die in V-Form angeordnet sind, um die Atmosphärenbremsflügel zu bilden.

3. Satellit mit einer Satellitenstabilisierungs- und Deorbitierungsvorrichtung nach Anspruch 2, wobei die Paneele (13, 13', 14, 14') rechteckig sind, wobei eine ihrer Längsseiten an den Mast befestigt ist.

4. Satellit mit einer Satellitenstabilisierungs- und Deorbitierungsvorrichtung nach Anspruch 2 oder 3, wobei die Paneele eines gleichen Mastes einen Winkel von 70 bis 110° miteinander einschließen.

5. Satellit mit einer Satellitenstabilisierungs- und Deorbitierungsvorrichtung nach einem der Ansprüche 2, 3 oder 4, wobei die Ausrichtung der V-förmig angeordneten Paneele für beide Masten (10, 11) die gleiche ist.

6. Verfahren zum Herstellen einer Satellitenstabilisierungs- und Deorbitierungsvorrichtung, wobei die Satellitenstabilisierungs- und Deorbitierungsvorrichtung ein Paar von koplanaren Masten (10, 11) enthält, die jeweils mindestens eine Membran tragen, die einen Atmosphärenbremsflügel bildet, und jeweils an ihrem dem an den Satelliten befestigten Ende gegenüberliegenden Ende mit einer Masse (m) zum Erzeugen eines Gravitationsgradienten versehen sind, umfassend die Schritte:

- Bestimmen einer minimalen effektiven Fläche des Atmosphärenbremsluftflügels mittels von Trajektorienberechnungstools, welche Fläche notwendig und ausreichend ist, um die Deorbitierung des Satelliten innerhalb eines ausgewählten Zeitraums zu ermöglichen;

- Verteilen dieser bestimmten Fläche auf zwei koplanare Masten der Länge L, die einen Winkel $2\alpha$ zwischen sich einschließen;

- Anordnen einer Masse m am Ende eines jeden Mastes;

- Positionieren des Paares von Masten an einer beliebigen Stelle auf dem Satelliten;

- Auswahl eines Satellitenbezugssystems derart, dass seine Z-Achse die Winkelhalbierende des Winkels zwischen den beiden Masten ist;

- Berechnen der Trägheitsmatrix des Satelliten, dann Diagonalisieren dieser Matrix;

- Wiederholen der Vorgehensweise durch aufeinanderfolgende Iterationen durch Verändern der Stelle der Anordnung der Masten, ihrer Länge, der Massen m und des Winkels $\alpha$, um zu erreichen,

a - dass die Z-Achse des Hauptbezugssystems des Satelliten auch die Winkelhalbierende der Masten ist;

b - dass die Trägheit IZ auf dieser Achse in diesem Bezugssystem ein Zwischenwert $I_{zwischen}$ zwischen einem Wert $I_{minimal}$ und einem Wert $I_{maximal}$ auf den beiden weiteren Achsen des Bezugssystems ist;

- Auswählen der Werte der Massen m, der Mastlängen und des Winkels $\alpha$, die es ermöglichen, die Gesamtmasse der Flügel zu minimieren und dabei eine gewisse Robustheit der Lösung zu gewährleisten, d.h. dass kleinere Abweichungen der Parameter um die ausgewählten Werte herum nicht das Verhalten des Satelliten mit seinen Flügeln verändern,

so dass die Masten so an den Satelliten befestigt sind, dass ihre Längsachsen nicht parallel verlaufen, wobei die Masten so angeordnet sind, dass sie mit der Winkelhalbierenden (12) zwischen den Masten einen festen Winkel $\alpha$ einschließen, der dazu ausgelegt ist, die Winkelhalbierende mit dem Geschwindigkeitsvektor des Satelliten in jeglicher Höhe auszurichten.

7. Verfahren nach Anspruch 6,
wobei die Masten jeweils mit zwei Membranen in Form von Paneelen (13, 13', 14, 14') versehen werden, die in V-Form angeordnet sind, um die Atmosphärenbremsflügel zu bilden.

8. Verfahren nach Anspruch 7,
wobei die Paneele (13, 13', 14, 14') rechteckig ausgeführt sind, wobei eine ihrer Längsseiten an den Mast befestigt ist.

9. Verfahren nach Anspruch 7 oder 8,
wobei
die Paneele eines gleichen Mastes einen Winkel von 70 bis 110° miteinander einschließen.

10. Verfahren nach einem der Ansprüche 7, 8 oder 9,
wobei die Ausrichtung der V-förmig angeordneten Paneele für beide Masten (10, 11) die gleiche ist.

11. Satellit mit einer Stabilisierungs- und Deorbitierungsvorrichtung nach einem der Ansprüche 6 bis 10.

**Claims**

1. A satellite provided with a device for stabilising and deorbiting a satellite (100), the device including a pair of coplanar masts (10, 11) each carrying at least one membrane forming an aerobraking sail, said masts being fastened to the satellite so that their longitudinal axes are not parallel to each other and being each provided at their end opposite their end fastened to the satellite with a mass (m) for generating a gravity gradient and for which the masts are disposed so as to form with the bisector (12) between the masts a fixed angle $\alpha$ adapted to align the bisector with the velocity vector of the satellite at any altitude, said bisector being an axis of the main reference frame of the inertia matrix of the satellite such that inertia IZ along said bisector is between the inertia values on both other axes of the main reference frame.

2. The satellite provided with a device for stabilising and deorbiting a satellite according to claim 1 for which the masts each carry two membranes as panels (13, 13', 14, 14') disposed in a V shape to form the aerobraking sails.

3. The satellite provided with a device for stabilising and deorbiting a satellite according to claim 2 for which the panels (13, 13', 14, 14') are rectangular, one of their long sides being fastened to the mast.

4. The satellite provided with a device for stabilising and deorbiting a satellite according to claim 2 or 3 for which the panels of a same mast form an angle from 70 to 110° between them.

5. The satellite provided with a device for stabilising and deorbiting a satellite according to any of claims 2, 3 or 4, for which the orientation of the panels disposed in a V-shape is the same for both masts (10, 11).

6. A method for making a device for stabilising and deorbiting a satellite including a stabilising and deorbiting device including a pair of coplanar masts (10, 11) each carrying at least one membrane forming an aerobraking sail and being each provided at their end opposite their end fastened to the satellite with a mass (m) for generating a gravity gradient, including the steps of:

- determining by means of trajectory calculating tools, a minimum effective surface area for an aerobraking sail necessary and sufficient to enable the satellite to be deorbited for a chosen duration;
- distributing this determined surface area on two coplanar masts, of a length L, forming an angle $2\alpha$ between them;
- placing a mass m at the end of each mast,
- positioning the pair of masts at an arbitrary place of the satellite
- choosing a satellite reference frame such that its axis Z is the bisector of the angle between both masts;
- calculating the inertia matrix of the satellite, and then diagonalizing this matrix;
- reproducing the process by successive iterations by varying the implantation place of the masts, their length, their masses m and the angle $\alpha$, in order to obtain:

a- that the axis Z of the satellite main reference frame is also the bisector of the masts;
b- that the inertia IZ on this axis in this reference frame is an intermediate value $I_{intermédiaire}$ between a value $I_{minimale}$ and a value $I_{maximale}$ on both other axes of said reference frame;

- choosing values of the masses m, lengths of the masts and angle $\alpha$ which enable the total mass of the sails to be minimised while ensuring a certain robustness of the solution, that is small variations in parameters around selected values do not change the attitudes of the satellite with its sails,

so that said masts are fastened to the satellite such that their longitudinal axes are not parallel to each other, said masts being disposed so as to form with the bisector (12) between the masts, a fixed angle $\alpha$ adapted to align the bisector with the velocity vector of the satellite at any altitude.

7. The method according to claim 6, for which the masts are each equipped with two membranes as panels (13, 13', 14, 14') disposed in a V-shape to form the aerobraking sails.

8. The method according to claim 7 for which the panels (13, 13', 14, 14') are made rectangular, one of their long sides being fastened to the mast.

9. The method according to claim 7 or 8 for which the panels of a same mast form an angle from 70 to 110° between each other.

10. The method according to any of claims 7, 8 or 9 for which the orientation of the panels disposed in a V-shape is the same for both masts (10, 11).

11. A satellite including a stabilising and deorbiting device made according to any of claims 6 to 10.

**Fig.1**

**Fig.2**

Perigee & Apogee
Nature:Mean parameters
CNES - STELA version : 2.5.1

**Fig.3**

**Fig.4**

**Fig.5A**

**Fig.5B**

**Fig.6A**   **Fig.6B**   **Fig.6C**

**Fig.6D**   **Fig.6E**   **Fig.6F**

14    11

13

10

14'

100

**Fig.7**

13'

120

**Fig.8**

## RÉFÉRENCES CITÉES DANS LA DESCRIPTION

**Documents brevets cités dans la description**

*   FR 2897842 A1

*   FR 2897843 A1

**Littérature non-brevet citée dans la description**

*   **L. G. JACCHIA.** *Smithsonian Astrophysical Observatory Special Report N° 375,* 1977